Europäisches Patentamt

European Patent Office

Office européen des brevets

(19)

(11) Veröffentlichungsnummer : **0 383 420 B1**

(12) # EUROPÄISCHE PATENTSCHRIFT

(45) Veröffentlichungstag der Patentschrift :
**22.12.93 Patentblatt 93/51**

(51) Int. Cl.⁵ : **F16N 29/02, F16N 7/38, B60R 17/02**

(21) Anmeldenummer : **90250047.9**

(22) Anmeldetag : **14.02.90**

(54) Zentralschmieranlage.

(30) Priorität : **16.02.89 DE 3904952**

(43) Veröffentlichungstag der Anmeldung :
**22.08.90 Patentblatt 90/34**

(45) Bekanntmachung des Hinweises auf die
Patenterteilung :
**22.12.93 Patentblatt 93/51**

(84) Benannte Vertragsstaaten :
**AT BE DE ES FR GB IT NL SE**

(56) Entgegenhaltungen :
**EP-A- 0 205 905
GB-A- 408 849
GB-A- 1 454 184
GB-A- 2 155 417
Drops A-Katalog "Zentralschmierung für
kleine und mittlere Maschinen",418-3/87-7174782 - Neue, Mailand; US-
A-4520902, US-A-4633976, US-A-4527661**

(73) Patentinhaber : **Willy Vogel AG
Motzener Strasse 35/37
D-12277 Berlin (DE)**

(72) Erfinder : **Meuer, Johannes, Dipl.-Ing.
Selbitzer Strasse 104
D-1000 Berlin 22 (DE)**
Erfinder : **Nemack, Christian, Dipl.-Ing.
Karwendelstrasse 29d
D-1000 Berlin 45 (DE)**
Erfinder : **Stockhammer, Raimund
Köhlerstrasse 44
D-1000 Berlin 45 (DE)**
Erfinder : **Todtenhaupt, Dieter
Hohhenzollerndamm 24
D-1000 Berlin 31 (DE)**

(74) Vertreter : **Böning, Manfred, Dr. Ing. et al
Patentanwälte Dipl.-Ing. Dieter Jander Dr. Ing.
Manfred Böning Leistikowstrasse 2
D-14050 Berlin (DE)**

EP 0 383 420 B1

## Beschreibung

Die Erfindung betrifft eine Zentralschmieranlage, insbesondere für Nutzfahrzeuge, mit einem Schmiermittelbehälter, einem Pumpenaggregat, einem Pausen- und Laufzeiten des Pumpenaggregates steuernden Steuergerät, einem mit dem Steuergerät zusammenwirkenden, den einwandfreien Betrieb der Anlage überwachenden Drucksensor, einem Druckbegrenzungsventil sowie mit Schmiermittelleitungen, durch die Schmierfett zu unterschiedlich weit vom Pumpenaggregat entfernten Schmierstellen zugeordneten Schmierstoffverteilern förderbar ist. Eine Schmieranlage dieser Gattung ist aus dem Katalog "Zentralschmierung für kleine und mittlere Maschinen", 418-3/87-7174782-Neue, Seite 35, der Firma Drops A, Mailand, bekannt.

Zentralschmieranlagen der vorstehenden Art werden in erheblichem Umfang insbesondere in moderne Nutzfahrzeuge eingebaut. Sie sind regelmäßig als Verbrauchsschmieranlagen konzipiert und mit sogenannten Einleitungsverteilern nach DIN 24271 ausgerüstet. Durch das Steuergerät der jeweiligen Anlage wird deren Pumpenaggregat in bestimmten, vom Benutzer einstellbaren Zeitabständen angetrieben, um Schmierfett in die Schmiermittelleitungen zu drücken. Dabei werden Dosierkolben von in üblicher Weise als Nachschmierverteiler ausgebildeten Schmierstoffverteilern durch ein ihrer Dosiergröße entsprechendes Schmierstoffvolumen vorgespannt, d.h. gegen die Kraft einer Feder in einem ihnen zugeordneten Zylinder verlagert. Sobald die Dosierkolben sämtlicher Verteiler vorgespannt sind und ein bestimmter Wert des Druckes in der Schmiermittelleitung erreicht ist, signalisiert der Drucksensor dem Steuergerät ein einwandfreies Arbeiten der Anlage. Um auch bei tiefen Temperaturen eine ausreichende Versorgung der Schmierstoffverteiler zu erreichen, arbeitet das Pumpenaggregat bei den bekannten Anlagen während einer fest vorgegebenen, vergleichsweise langen Zeit, wobei die während dieser Laufzeit über das Aufnahmevermögen der Schmierstoffverteiler hinausgehende Schmierstoffmenge nach Erreichen eines oberhalb des Ansprechdruckes des Drucksensors liegenden Druckes über das Druckbegrenzungsventil zurück in den Schmierstoffbehälter gelangt. Nach dem Ende der Pumpenlaufzeit wird der Druck im Verteilungssystem durch ein Entlastungsventil bis auf einen Restdruck abgebaut und das Schmierfett von den unter Federkrafteinwirkung stehenden Dosierkolben der Verteiler zu den Schmierstellen gefördert.

Dadurch, daß bei den bekannten Zentralschmieranlagen die Pumpenlaufzeit konstant, und zwar hinreichend groß ist, um auch im Winterbetrieb eine ausreichende Versorgung der Schmierstellen zu ermöglichen, sind die Gebrauchszeiten der Pumpenaggregate länger als dies beispielsweise bei reinem Sommerbetrieb erforderlich wäre. Mit der Erfindung wird das Ziel verfolgt, die Betriebsdauer einschlägiger Pumpenaggregate für vorgegebene Einsatzzeiten des mit einer Zentralschmieranlage ausgestatteten Fahrzeuges oder anderen Gerätes zu reduzieren. Das aufgezeigte Problem wird erfindungsgemäß dadurch gelöst, daß dem Steuergerät ein Umgebungstemperaturfühler zugeordnet ist, dessen Signale zur Veränderung der Laufzeit des Pumpenaggregates in Abhängigkeit von der Umgebungstemperatur und somit vom Penetrationsverhalten des Schmierfettes im Sinne einer Abnahme der Laufzeit mit zunehmender Umgebungstemperatur genutzt werden.

Im Hinblick darauf, daß bei Fahrzeugen, die das Hauptanwendungsgebiet erfindungsgemäßer Anlagen bilden, ca. 90% aller Abschmierfälle in Temperaturbereichen erfolgen, in denen das Penetrationsvermögen des Schmierfettes kurze Laufzeiten des Pumpenaggregates zuläßt, wird der Verschleiß der Pumpe durch die Erfindung spürbar verringert und die Gebrauchsdauer des Pumpenaggregates deutlich erhöht. Hinzu kommt, daß bei einem Bruch in dem Hauptleitung der Anlage während des Sommerbetriebes aufgrund der hier verkürzten Pumpenlaufzeit nur äußerst geringe Schmierstoffmengen ungenutzt in die Umgebung gelangen.

Als besonders vorteilhaft erweist es sich, wenn das Steuergerät mit einem Steuerglied versehen ist, das bei Vorliegen niedriger Umgebungstemperaturen und einer hieraus resultierenden längeren Laufzeit des Pumpenaggregates eine Minderung des Förderstromes der Pumpe bewirkt. Auf diese Weise erreicht man, daß das Schmierfett in den das Pumpenaggregat mit den Schmierstoffverteilern verbindenden Leitungen langsamer als im Normalbetrieb unter Druck gesetzt wird und tatsächlich erst dann, wenn alle Dosierkolben der Schmierstoffverteiler vorgespannt sind, der Druck in der Anlage einen Wert erreicht, der zum Ansprechen des Drucksensors führt und nach weiterem Druckanstieg das Druckbegrenzungsventil wirksam werden läßt. Es wird so vermieden, daß es bei niedrigen Umgebungstemperaturen infolge schlechten Penetrationsverhaltens des Schmierfettes zu einem vorzeitigen Ansprechen des einen einwandfreien Betrieb der Anlage signalisierenden Drucksensors kommt und darüber hinaus die geförderte Schmierstoffmenge infolge des weiter ansteigenden Druckes über das Druckbegrenzungsventil des Pumpenaggregates in den Behälter zurückgelangt, ehe weit entfernte Schmierstoffverteiler voll oder auch nur teilweise mit Schmierstoff versorgt sind. Mit der Minderung des Förderstromes, d.h. der pro Zeiteinheit geförderten Schmierstoffmenge, sollte gleichzeitig eine leichte Erhöhung der Laufzeit des Pumpenaggregates einhergehen.

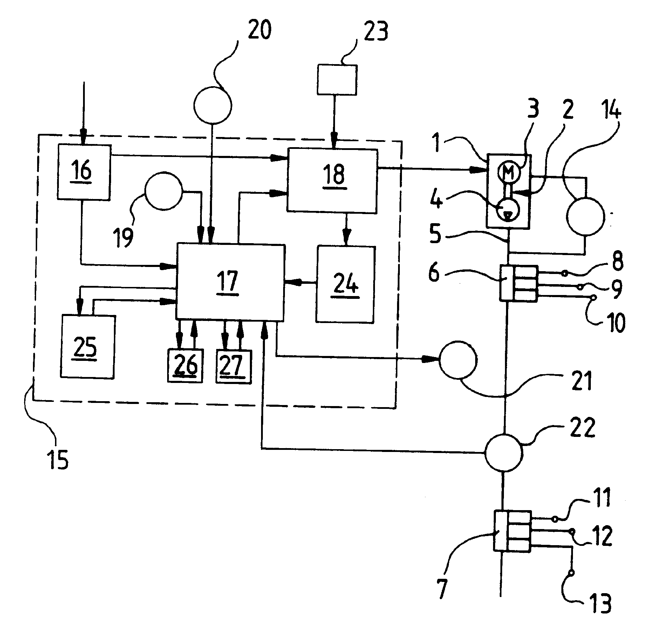

Eine bevorzugte Ausführungsform der Erfindung wird im folgenden anhand des in der beigefügten Zeichnung dargestellten Blockschaubildes näher erläutert.

In der Figur ist ein mit einem Fließfett gefüllter Schmiermittelbehälter 1 mit einem Pumpenaggregat 2, das

EP 0 383 420 B1

einen Antriebsmotor 3 und eine Pumpe 4 aufweist. Die Pumpe 4 des Pumpenaggregates ist über eine Hauptleitung 5 mit mehreren in Reihe geschalteten, als Nachschmierverteiler ausgebildeten Schmierstoffverteilern verbunden, von denen zwei Schmierstoffverteiler 6 und 7 dargestellt sind. Die Schmierstoffverteiler übernehmen die Verteilung dosierter Schmierstoffmengen an diverse Schmierstellen 8 bis 13, wobei die Schmierstoffförderung erst nach Beendigung des Pumpenlaufes und Entlastung der Hauptleitung 5 unter der Kraft sogenannter, auf Dosierkolben der Schmierstoffverteiler einwirkender Speicherfedern erfolgt.

14 ist ein Druckbegrenzungsventil, über das während der Laufzeit des Pumpenaggregates 2 gefördertes überschüssiges Schmierfett nach Auffüllen sämtlicher Schmierstoffverteiler zurück in den Schmiermittelbehälter 1 gelangt.

Zur Steuerung der Anlage dient ein Steuergerät 15 mit einem Netzteil 16, das bei Einbau in ein Nutzfahrzeug mit Einschalten der Zündung mit Spannung beaufschlagt wird. Das Netzteil 16 speist einen Mikroprozessor 17 und ein Leistungsteil 18. Dem Mikroprozessor 17 zugeordnet sind ein Pausenzeitwähler 19 und ein Drucktaster 20 für Zwischenschmierungen und die Löschung eventueller Störmeldungen, die durch eine Signalleuchte 21 angezeigt werden, wenn sich in der Hauptleitung 5 nicht ein durch einen Drucksensor 22 überwachter ausreichend hoher Druck einstellt.

Mit dem Leistungsteil 18 ist ein Umgebungstemperaturfühler 23 verbunden, dessen Signale über einen Analog/Digitalumwandler 24 zum Mikroprozessor 17 gelangen. Im Mikroprozessor 17 werden die Signale mit in einem Datenspeicher 25 abgespeicherten Daten verglichen, und es wird die Laufzeit des Antriebsmotors 3 entsprechend der ermittelten Umgebungstemperatur festgelegt. Die im Datenspeicher 25 abgespeicherten Daten erhält man aufgrund von Versuchsreihen, mit denen in Abhängigkeit vom jeweils verwendeten Schmierfett Pumpenlaufzeiten ermittelt werden, die bei den jeweiligen Umgebungstemperaturen eine Gewähr für eine einwandfreie Abschmierung bieten.

Während der Pumpenlaufzeit erfolgt eine Abfrage des Drucksensors 22. Erreicht der Druck in der Anlage nicht den vorgeschriebenen Wert, signalisiert die nach dem Ende der Laufzeit der Pumpe nicht erlöschende Signalleuchte 21 eine Störung.

In der Praxis finden beim Haupteinsatzgebiet der beschriebenen Zentralschmieranlagen, d.h. beim Einbau in Nutzfahrzeuge, etwa 90% aller Abschmierfälle im Temperaturbereich von -10° bis +75°C statt, während nur 10% der Abschmierfälle im Temperaturbereich von -10° bis -25°C erfolgen. Geht man von einer Abschmierung pro 8-Stunden-Schicht und Zwei-Schicht-Betrieb sowie einer bisher üblichen, auch Winterbedingungen Rechnung tragenden Pumpenlaufzeit von etwa 150 Sekunden aus und verkürzt man diese Pumpenlaufzeit für den Temperaturbereich von -10° bis +75°C um 80%, d.h. um einen Betrag, der sich als vertretbar erwiesen hat, so läßt sich die Gebrauchsdauer der Pumpe etwa verdreifachen, wie dies die nachstehende, von 200 Arbeitstagen und 440 Abschmierungen pro Jahr ausgehende Berechnung zeigt:

Pumpenlaufzeit konstant 150 Sekunden

$$440 \times 150 = 66000 \text{ Sekunden} = 18{,}3 \text{ Stunden/Jahr.}$$

Pumpenlaufzeit 10%-150 Sekunden; 90%-30 Sekunden

$$440 \times 30 \times 0{,}9 = 11880 \text{ Sekunden} = 3{,}3 \text{ Stunden/Jahr,}$$

$$440 \times 150 \times 0{,}1 = 6600 \text{ Sekunden} = \underline{1{,}8 \text{ Stunden/Jahr}}$$

$$5{,}1 \text{ Stunden/Jahr.}$$

Neben der Reduzierung der Gesamtpumpenlaufzeit auf etwa 30% würden bei einem Rohrbruch in 90% aller Schmierfälle lediglich 20% des Schmierfettes in die Umgebung gelangen, das bei herkömmlichen Anlagen aus dem Leitungssystem austreten würde.

Um sicherzustellen, daß auch bei extrem niedrigen Temperaturen sämtliche Schmierstoffverteiler mit Druck beaufschlagt werden, ist das Steuergerät 15 mit zwei Steuergliedern 26 und 27 versehen, von denen das Steuerglied 26 bei Unterschreiten einer bestimmten Temperatur eine Senkung der Drehzahl und das Steuerglied 27 gleichzeitig eine leichte Erhöhung der Laufzeit des Antriebsmotors 3 bewirkt. Durch die Drehzahlabsenkung wird der Förderstrom der Pumpe 4 reduziert. Die Folge ist ein langsamerer, dem schlechteren Penetrationsverhalten des kalten Schmierfettes Rechnung tragender Druckaufbau im Leitungssystem der Anlage. Es wird so die Gefahr eliminiert, daß sich infolge eines hohen Rohrleitungswiderstandes und der Trägheit des Schmierstoffes einerseits im Hauptleitungsstück bis zum Drucksensor 22 ein Druck aufbaut, der eine ein-

3

EP 0 383 420 B1

wandfreie Funktion aller Schmierstoffverteiler signalisiert und andererseits Schmierstoff bei weiter ansteigendem Druck über das Druckbegrenzungsventil 14 vorzeitig zurück in den Schmiermittelbehälter gelangt.

**Patentansprüche**

1. Zentralschmieranlage, insbesondere für Nutzfahrzeuge, mit einem Schmiermittelbehälter (1), einem Pumpenaggregat (2), einem Pausen- und Laufzeiten des Pumpenaggregates (2) steuernden Steuergerät (15), einem mit dem Steuergerät (15) zusammenwirkenden, den einwandfreien Betrieb der Anlage überwachenden Drucksensor (22), einem Druckbegrenzungsventil (14) sowie mit Schmiermittelleitungen (5), durch die Schmierfett zu unterschiedlich weit vom Pumpenaggregat entfernten Schmierstellen (8-13) zugeordneten Schmierstoffverteilern (6,7) förderbar ist, dadurch gekennzeichnet, daß dem Steuergerät (15) ein Umgebungstemperaturfühler (23) zugeordnet ist, dessen Signale zur Veränderung der Laufzeit des Pumpenaggregates (2) in Abhängigkeit von der Umgebungstemperatur und somit vom Penetrationsverhalten des Schmierfettes im Sinne einer Abnahme der Laufzeit mit zunehmender Umgebungstemperatur genutzt werden.

2. Zentralschmieranlage nach Anspruch 1, dadurch gekennzeichnet, daß die vom Umgebungstemperaturfühler (23) gelieferten analogen Signale nach Digitalisierung in einem A/D-Wandler (24) einem Mikroprozessor (17) zugeführt werden, in dem durch Vergleich mit in einem Datenspeicher (25) gespeicherten Daten die Laufzeit des Pumpenaggregates (2) in Abhängigkeit von der Umgebungstemperatur festgelegt wird.

3. Zentralschmieranlage nach Anspruch 1 oder 2, dadurch gekennzeichnet, daß die Laufzeit des Pumpenaggregates (2) in Stufen veränderbar ist.

4. Zentralschmieranlage nach Anspruch 3, dadurch gekennzeichnet, daß die Laufzeit des Pumpenaggregates (2) in zwei Stufen veränderbar ist, von denen die eine einen Temperaturbereich von etwa -10° bis +75°C und die andere einen Temperaturbereich von -10° bis -25°C abdeckt.

5. Zentralschmieranlage nach einem der Ansprüche 1 bis 4, dadurch gekennzeichnet, daß das Steuergerät (15) mit einem Steuerglied (26) versehen ist, das bei Vorliegen niedriger Umgebungstemperaturen und einer hieraus resultierenden längeren Laufzeit des Pumpenaggregates (2) eine Minderung des Förderstromes der Pumpe (4) bewirkt.

6. Zentralschmieranlage nach Anspruch 5, dadurch gekennzeichnet, daß zur Minderung des Förderstromes eine Absenkung der Drehzahl des Pumpenaggregates (2) erfolgt.

7. Zentralschmieranlage nach Anspruch 5 oder 6, dadurch gekennzeichnet, daß das Steuergerät (15) mit einem weiteren Steuerglied (27) zur zusätzlichen Erhöhung der Pumpenlaufzeit zwecks Kompensierung des infolge der Minderung des Förderstromes der Pumpe (4) innerhalb einer vorgegebenen Laufzeit von der Pumpe (4) geförderten Mindervolumens versehen ist.

**Claims**

1. A centralized lubrication system, especially for commercial vehicles, with a lubricant reservoir (1), a pump assembly (2), a control unit (15) controlling the pause and operating times of the pump assembly (2), a pressure sensor (22) operating in conjunction with the control unit (15) to monitor the proper functioning of the system, a pressure relief valve (14) and with lubricant lines (5) through which lubricant can be fed to lubricant metering devices (6, 7) assigned to lubrication points (8-13) at varying distances from the pump assembly, characterised in that an ambient temperature sensor (23) is assigned to the control unit (15), with the signals of the ambient temperature sensor (23) eliciting a change in the operating time of the pump assembly (2) in dependence upon the ambient temperature and thus of the penetration properties of the lubricant, such that there is a reduction of the operating time with increasing ambient temperature.

2. A centralized lubrication system according to Claim 1, characterised in that the analogue signals from the ambient temperature sensor (23) are digitalized by an analogue-to-digital converter (24), fed in digital form to a microprocessor (17), and compared therein to data stored in a data memory (25), and the operating

4

time of the pump assembly (2) is determined in dependence upon the ambient temperature.

3. A centralized lubrication system according to Claim 1 or Claim 2, characterised in that the operating time of the pump assembly (2) may be changed in stages.

4. A centralized lubrication system according to Claim 3, characterised in that the operating time of the pump assembly (2) can be changed in two stages, of which one covers a temperature range of approximately -10° to +75°C and the other a temperature range of -10° to -25°C.

5. A centralized lubrication system according to any one of Claims 1 to 4, characterised in that the control unit (15) is provided with a control element (26) which, in the event of lower ambient temperatures and resultant longer operating time of the pump assembly (2), elicits a reduction in the delivery rate of the pump (4).

6. A centralized lubrication system according to Claim 5, characterised in that there is a reduction in the rotational speed of the pump assembly (2) to reduce the delivery rate.

7. A centralized lubrication system according to Claim 5 or Claim 6, characterised in that the control unit (15) is provided with an additional control element (27) for additional increase of the pump operating time to compensate for the reduced volume of lubricant conveyed within a preset operating time of the pump (4) as a result of the reduction in the delivery rate of the pump (4).

**Revendications**

1. Système de graissage central, notamment pour véhicules utilitaires, comportant un réservoir de lubrifiant (1), une unité de pompage (2), un appareil de commande (15) qui commande des temps d'arrêt et des temps de marche de l'unité de pompage (2), un capteur de pression (22) qui coopère avec l'appareil de commande (15) et contrôle le fonctionnement parfait du système, une soupape de limitation de pression (14) ainsi que des canalisations (5) pour le lubrifiant, au moyen desquelles la graisse lubrifiante peut être amené à des distributeurs de lubrifiant (6,7) associés à des points de graissage (8-13) différement éloignés de l'unité de pompage, caractérisé en ce qu'à l'appareil de commande (15) est associé un capteur (23) de la température ambiante, dont les signaux sont utilisés pour modifier la durée de marche de l'unité de pompage (2) en fonction de la température ambiante et par consequent du comportement de pénétration de la graisse lubrifiante au sens d'une réduction de la durée de marche lorsque la température ambiante augmente.

2. Système de graissage central selon la revendication 1, caractérisé en ce que les signaux analogiques, délivrés par le capteur (23) de la température ambiante, sont envoyés, après numérisation dans un convertisseur analogique/numérique (24), à un microprocesseur (17), dans lequel le temps de marche de l'unité de pompage (2) et fixé en fonction de la température ambiante, par comparaison à des données mémorisées dans une mémoire de données (25).

3. Système de graissage central selon la revendication 1 ou 2, caracterisé en ce que la durée de marche de l'unité de pompage (2) peut être modifié par échelons.

4. Système de graissage central selon la revendication 3, caracterisé en ce que la durée de marche de l'unité de pompage (2) peut être modifiée en deux échelons, dont l'un couvre une gamme de températures allant d'environ -10°C jusqu'à +75°C et dont l'autre couvre une gamme de températures allant de -10°C à -25°C.

5. Système de graissage central selon l'une des revendications 1 à 5, caracterisé en ce que l'appareil de commande (15) et èquipé d'un organe de commande (26), qui, lors de la présence de basses températures ambiantes et dans le cas d'une durée de marche plus longue, qui en résulte, de l'unité de pompage (2), opère une réduction du débit de refoulement de la pompe (4).

6. Système de graissage central selon la revendication 5, caractérisé en ce que pour la réduction du débit de refoulement, une réduction de la vitesse de rotation de l'unité de pompage (2) est opérée.

7. Système de graissage central selon la revendication 5 ou 6, caractérisé en ce que l'appareil de commande (15) est équipé d'un autre organe de commande (27) servant à accroître de façon supplémentaire la duré de marche de la pompe en vue de compenser le volume réduit entraîne en raison de la réduction de débit de refoulement de la pompe (4), pendant une durée de marche prédéterminée de cette dernière.